# EUROPEAN PATENT APPLICATION

(11) **EP 4 398 401 A1**
(43) Date of publication of application: **10.07.2024**
(21) Application number: 23215413.8
(22) Date of filing: 11.12.2023
(51) Int. Cl.: H01M 50/40, H01M 50/116

(54) **INSULATION STRUCTURE AND SECONDARY BATTERY**

(30) Priority: 30.12.2022 CN 202223593081 U
(71) Applicant: AESC Japan Ltd., Yokohama-Shi, Kanagawa 220-0012 (JP)
(72) Inventor: CHE, Peipei, Jiangyin City, Wuxi City, 214443 (CN); CAO, Shengrong, Jiangyin City, Wuxi City, 214443 (CN); QIAN, Jia, Jiangyin City, Wuxi City, 214443 (CN); ZHANG, Jie, Jiangyin City, Wuxi City, 214443 (CN)
(74) Representative: Becker, Eberhard

(57) **Abstract**

Disclosed are an insulation structure (100), a secondary battery (20) and a battery pack, including a first insulation member (1) having a bottom surface covering area (2) and a side covering area (3), wherein the side covering area (3) is located on the same side of the bottom surface covering area (2) to form an accommodation space (4); the side covering area (3) includes two opposite first side covering areas (31) and two opposite second side covering areas (32); at least one of the two opposite first side covering areas (31) includes a central overlapping area (310), a first side overlapping area (320) and a second side overlapping area (330). The insulation structure (100) and the secondary battery (20) realize the insulation wrapping of the first side covering area (3) on the three overlapping areas through folding and covering the three overlapping areas.

## Description

### BACKGROUND

### Field of the Disclosure

The disclosure relates to the technical field of batteries, in particular to an insulation structure and a secondary battery.

### Description of Related Art

In the field of battery manufacturing for new energy, in order to reduce the metal shavings in the housing and avoid the risk of internal short circuit of lithium batteries, most current manufacturers replace tab die-cutting with full-tab type batteries.

When the conventional insulation material (such as Mylar sheet) is folded, there is a gap at the bottom. When the battery cell is a full-tab type battery cell, it is very likely to touch the bottom of the housing, and there is a risk of short-circuit insulation.

In order to overcome the short-circuit insulation risk which might occur at the gap of bottom, multi-layer insulation materials are normally adopted to cover the gap at the bottom. However, such multi-layer insulation materials will increase the overall thickness or length of the electrode assembly of the battery cell at the covered place and affect the assembly and use of the battery.

### SUMMARY OF THE DISCLOSURE

The technical problem to be solved by the disclosure is to provide an insulation structure and a secondary battery in order to overcome the defect of the related art, that is, the insulation wrapping of the electrode assembly is poor, and the thickness of the battery is increased when fully coated.

The disclosure solves the technical problems described above through the following technical solutions.

An insulation structure of the disclosure includes a first insulation member, the first insulation member includes a bottom surface covering area and a side covering area, and the side covering area is located on the same side of the bottom surface covering area to form an accommodation space.

The side covering area includes two opposite first side covering areas and two opposite second side covering areas.

At least one of the two opposite first side covering areas includes a central overlapping area, a first side overlapping area and a second side overlapping area. The central overlapping area is formed by extending the bottom surface covering area, and the first side overlapping area is formed by extending one of the two opposite first side covering areas, and the second side overlapping area is formed by extending the other of the two opposite first side covering areas.

Two of the central overlapping area, the first side overlapping area and the second side overlapping area do not overlap each other, and the other of the central overlapping area, the first side overlapping area and the second side overlapping area at least partially covers an area between the two areas that are not overlapped.

In the solution, by folding and covering the three overlapping areas (the central overlapping area, the first side overlapping area and the second side overlapping area), the insulation wrapping of the first side covering area on the three overlapping areas is realized. Two of the three overlapping areas do not overlap each other, and the other at least partially covers an area between the two areas that are not overlapped, so that the other overlapping area is able to cover the edge gap formed by the folded overlapping area of the two areas that are not overlapped, thus improving the insulation effect of the cladding on the three overlapping sides. In the meantime, the two areas that are not overlapped among the three overlapping areas make the first side covering area cover a layer of insulation structure, the other of the three overlapping areas allows the first side covering area to have a structure with at most two insulation layers. In this way, the thickness of the battery cell will not be increased, and the space utilization rate is improved.

Preferably, edges of two of the central overlapping area, the first side overlapping area and the second side overlapping area are joined to form a junction, and the other of the central overlapping area, the first side overlapping area and the second side overlapping area at least partially covers the junction.

In this solution, two of the three overlapping areas (the central overlapping area, the first side overlapping area and the second side overlapping area) are not overlapped by means of connecting edges, making the first insulation member to be easily cut so it is easy to control the precision of cutting. In this way, the gap at the edge formed after connection is as small as possible to improve the insulation effect of the edge of the junction. In the meantime, it is possible to ensure the two overlapping areas forming the junction do not increase the thickness of the first side covering area. The junction is at least partially covered by the other of the three overlapping areas, so that the connected gap at the edge is covered and the insulation effect of the connected gap at the edge is increased.

Preferably, the shape of the junction is one of straight line, curved line and stepped shape.

In this solution, the shape of the junction adopts one of straight line, curved line and stepped shape, which is easy to cut, and it is easy to control the edges of the two overlapping areas forming the junction to be consistent and reduce errors.

Preferably, one of the first side overlapping area and the second side overlapping area is connected to an edge of the central overlapping area to form the junction.

In the solution, one of the first side overlapping area and the second side overlapping area is adopted to be connected with the edge of the central overlapping area to form a junction, so that the junction only exists on one side of the central overlapping area, and only one side needs to be cut to form a junction and reduce the process. The other one of the first side overlapping area and the second side overlapping area is folded to cover the other side of the central overlapping area, which may ensure the insulation effect at the edge of the other side.

Preferably, edges of the first side overlapping area and the second side overlapping area are joined to form the junction.

In this solution, the edges of the first side overlapping area and the second side overlapping area are joined to form a junction, so that the central overlapping area does not need to be cut, and the folded edges of the central overlapping area and the bottom surface covering area are kept intact and insulated.

Preferably, a transition gap is provided at the junction of the central overlapping area, the bottom surface covering area and the second side covering area.

In this solution, a transition gap is provided at the junction of the central overlapping area, the bottom surface covering area and the second side covering area, so that the three overlapping areas (the central overlapping area, the first side overlapping area and the second side overlapping area) are easily folded at the transition gap. In this way, it is possible to avoid the occurrence of stress at the junction to make the first insulation member crack, thus avoiding the risk of electric leakage.

Preferably, the first insulation member is integrally formed.

In this solution, the first insulation member is integrally formed, which makes the first insulation member easy to process and avoids insulation risks caused by separation and splicing.

Preferably, the insulation structure further includes a second insulation member, and the second insulation member covers the gap at the edge of the junction.

In this solution, the gap at the edge of the junction is covered by the second insulation member, so that the gap at the edge generated by the non-overlapping junction is covered by the second insulation member, thereby ensuring the full insulation effect of each edge of the junction.

Preferably, the insulation structure further includes a fixing part, and the fixing part connects the other one of the central overlapping area, the first side overlapping area and the second side overlapping area and the two opposite second side covering areas.

In this solution, the other of the three overlapping areas (the central overlapping area, the first side overlapping area and the second side overlapping area) and the two opposite second side covering areas are connected by the fixing part, and the two opposite second side covering areas are fixed with other covering areas to form an accommodation space, which also makes the three overlapping areas (bottom surface covering area, first side covering area and second side covering area) have connection strength after folding to ensures the stability of accommodation space.

Preferably, the insulation structure further includes a third insulation member, the third insulation member covers at least part of the top area of the accommodation space and at least partially overlaps with the side covering area.

In this solution, the insulation effect of the top area is achieved through the third insulation member of the above structure, and the folding edge of the third insulation member folded toward the side covering area achieves the insulation effect, thereby improving the insulation effect of the entire insulation structure in various covering areas. By at least partially overlapping the third insulation member with the side covering area, it is also possible to avoid the situation that the third insulation member is too long to be flattened with the side covering area.

Preferably, the third insulation member covers an area corresponding to the explosion-proof valve.

In this solution, the area corresponding to the explosion-proof valve is covered by the third insulation member, so that the area of the explosion-proof valve is insulated to ensure safety.

Preferably, the material of the third insulation member includes colloid.

In this solution, the material of the third insulation member includes colloid, so that the third insulation member is viscous and is able to be connected to the side covering area, thereby obtaining a better fixing effect.

Preferably, the accommodation space is adopted to cover the electrode assembly.

In this solution, the accommodation space is adopted to cover the electrode assembly, so that various covering surfaces and the junction edge of the electrode assembly are insulated and protected to avoid the risk of electric leakage.

A secondary battery of the disclosure includes an electrode assembly, a housing, a top cover assembly and the above-mentioned insulation structure.

The housing has an opening, the electrode assembly is accommodated in the housing, and the top cover assembly is connected to the housing and covers the opening of the housing.

The insulation structure covers the outer side of the electrode assembly.

In this solution, the above-mentioned insulation structure is adopted to cover the outer side of the electrode assembly to separate the housing from the electrode assembly, thereby improving the insulation effect between the covered surface and edge of the electrode assembly and the housing, and avoiding the risk of short circuit. Also, the thickness of the electrode assembly on the first side covering area is not increased, and the subsequent configuration requirements of the secondary battery are not affected.

A battery pack of the disclosure includes:
a box;
a secondary battery as described above;
a cover covers the opening of the box to form a closed space with the space of the box to accommodate the secondary battery.

The positive advantageous effect of the disclosure is that the insulation structure and the secondary battery realize insulation wrapping of the first side covering area on the three overlapping areas by folding and covering the three overlapping areas (the central overlapping area, the first side overlapping area and the second side overlapping area). Two of the three overlapping areas do not overlap each other, and the other at least covers an area between the two areas that are not overlapped with each other, which enables another overlapping area to cover the edge gap formed by two non-overlapping overlapping areas during non-overlapping folding, thereby improving the insulation effect of the cladding on the three overlapping areas. In the meantime, the two areas that are not overlapped among the three overlapping areas make the first side covering area cover a layer of insulation structure, the other of the three overlapping areas allows the first side covering area to have a structure with at most two insulation layers. In this way, the thickness of the battery cell will not be increased, and the space utilization rate is improved.

### BRIEF DESCRIPTION OF THE DRAWINGS

FIG. 1 is a schematic view of a flattened structure of the first insulation member according to Embodiment 1 of the present disclosure.
FIG. 2a is a schematic structural view of an electrode assembly covered by the first insulation member in the Embodiment 1 of the present disclosure during the folding process.
FIG. 2b is another schematic structural view of an electrode assembly covered by the first insulation member in the Embodiment 1 of the present disclosure during the folding process.
FIG. 2c is a schematic structural view of the insulation structure of Embodiment 1 of the present disclosure.
FIG. 3a is a schematic view of a partial structure of the bottom of the first insulation member of Embodiment 1 of the present disclosure during the folding process.
FIG. 3b is a schematic view of a partial structure of the bottom of the first insulator member in Embodiment 1 of the present disclosure after the folding is completed.
FIG. 3c is an enlarged schematic view of part A in FIG. 1.
FIG. 4 is a schematic view of the structural state of each step in the folding process of the electrode assembly covered by the first insulation member in Embodiment 1 of the present disclosure (excluding the covering of the second insulation member and the adhesion of the fixing part).
FIG. 5 is a schematic structural view of a secondary battery according to Embodiment 2 of the present disclosure.

### REFERENCE SIGNS LIST

100: insulation structure; 1: first insulation member; 2: bottom surface covering area; 3: side covering area; 4: accommodation space; 31: first side covering area; 310: central overlapping area; 320: first side overlapping area; 330: second side overlapping area; 32: second side covering area; 5: gap; 6: junction; 7: strip-shaped gap; 8: transition gap; 9: second insulation member; 10: non-closed gap; 11: fixing part; 20: secondary battery; 21: electrode assembly; 22: top cover assembly; 23: explosion-proof valve.

### DESCRIPTION OF EMBODIMENTS

A preferred embodiment is given below, and the disclosure is described more clearly and completely in conjunction with the accompanying drawings.

### Embodiment 1

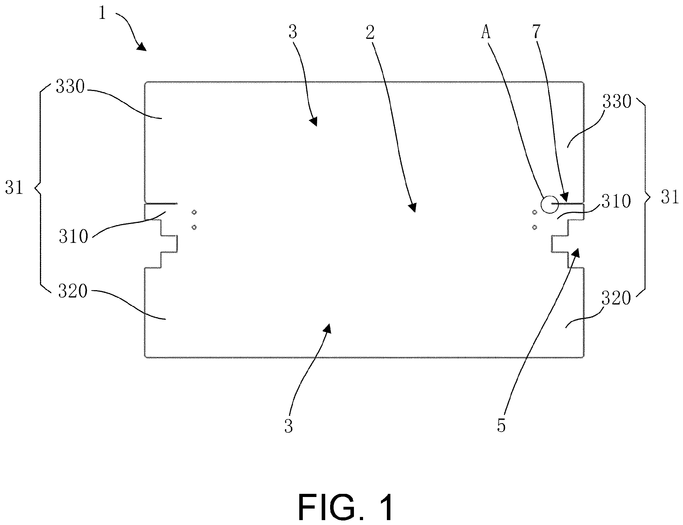

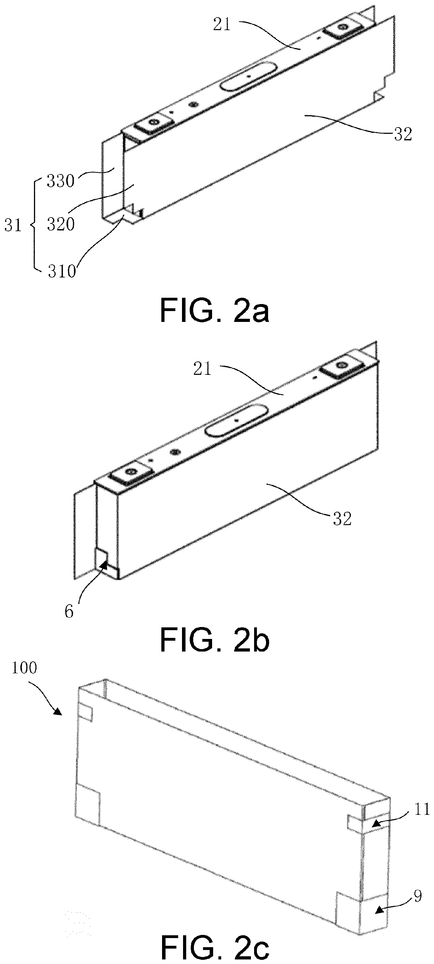

As shown in FIG. 1 and FIG. 2a to FIG. 2c, this embodiment provides an insulation structure 100, the insulation structure 100 includes a first insulation member 1, the first insulation member 1 is specifically an insulation film, and the material thereof is Mylar (PET polyester thin film). The insulation film of this material may also be called Mylar film or Mylar sheet. Certainly, there are many insulation materials, and in other embodiments, the first insulation member may also use other insulation materials.

The first insulation member 1 includes a bottom surface covering area 2 and a side covering area 3, and the side covering area 3 is located on the same side of the bottom surface covering area 2 to form an accommodation space 4.

The side covering area includes two opposite first side covering areas 31 and two opposite second side covering areas 32.

The two opposite first side covering areas 31 include a central overlapping area 310, a first side overlapping area 320 and a second side overlapping area 330. The central overlapping area 310 is formed by extending the bottom surface covering area 2, the first side overlapping area 320 is formed by extending one of the two opposite first side covering areas 31, and the second side overlapping area 330 is formed by extending the other of the two opposite first side covering areas 31.

Two of the central overlapping area 310, the first side overlapping area 320 and the second side overlapping area 330 do not overlap each other, and the other one of the central overlapping area 310, the first side overlapping area 320 and the second side overlapping area 330 covers an area between the two areas that are not overlapped.

In the insulation structure 100, by extending and forming three overlapping areas (the central overlapping area 310, the first side overlapping area 320 and the second side overlapping area 330), the insulation wrapping of the first side covering area 31 on the three overlapping areas is realized. Two of the three overlapping areas do not overlap each other, and the other covers an area between the two areas that are not overlapped, so that the other overlapping area is able to cover the edge gap formed by the folded overlapping area of the two areas that are not overlapped, thus improving the insulation effect of the cladding on the three overlapping areas. In the meantime, the two areas that are not overlapped make the first side covering area 31 cover a layer of insulation structure, the other of the three overlapping areas allows the first side covering area 31 to have a structure with at most two insulation layers. In this way, the thickness of the battery cell will not be increased, and the space utilization rate is improved. In this way, it is possible to realize that the thickness of the battery on the overlapped and covered area is not increased, so as to ensure the subsequent dimensional requirements of the battery assembly.

The accommodation space 4 is configured to cover the electrode assembly 21. That is to say, the insulation structure 100 covers the electrode assembly 21 in such accommodation space 4, so that each covering surface and junction edge of the electrode assembly 21 are isolated from the outer housing, thereby providing insulation protection and avoiding the risk of short circuit.

In other embodiments, not all surfaces may need to be insulated, and only one first side covering area 31 may have three overlapping areas, instead of both first side covering areas 31 having three overlapping areas. Therefore, the positions of the three overlapping areas may be adjusted correspondingly according to the needs of the insulation wrapping. Moreover, according to the needs of the object to be insulated, three overlapping areas may also be cut in the second side covering area 32.

Specifically, as shown in FIG. 1 and FIG. 2a to FIG. 2c, two of the three overlapping areas, that is, the central overlapping area 310 and the first side overlapping area 320, are cut out at the junction to form a gap 5 with a large area. After the two overlapping areas are folded, their edges are connected to form the junction 6. Another of the three overlapping areas, that is, the second side overlapping area 330 is cut to form a thin strip-shaped gap 7 at the junction between the second side overlapping area 330 and the central overlapping area 310, so that the second side overlapping area 330 may be folded to cover the junction 6.

In such an embodiment, two of the three overlapping areas are not overlapped by means of edge bonding, so that the first insulation member 1 is easy to cut, and the precision of cutting is easy to control. In this way, the gap at the edge formed after connection is as small as possible to improve the insulation effect of the edge of the junction 6. Moreover, the junction 6 only exists on one side of the central overlapping area 310 (that is, the side near the first side overlapping area 320), and only one side needs to be cut to form the junction 6, thus reducing the operation steps. After the second side overlapping area 330 is folded, the second side overlapping area 330 covers the other side of the central overlapping area 310 (that is, the side close to the second side overlapping area 330), which may ensure the insulation effect on the edge of the other side. In the meantime, it is also ensured that the two overlapping areas forming the junction 6 do not increase the thickness of the first side covering area 31.

The junction 6 is covered by the other one of the three overlapping areas, so that the connected edge gap is covered and the insulation effect of the connected edge gap is improved.

In other embodiments, which two of the three overlapping areas are selected to be bonded to form the junction 6 and the remaining one covers the junction 6 may be freely combined and adjusted according to actual needs. For example, it is also possible to cut out two gaps 5 with matching sizes and shapes in the first side overlapping area 320 and the second side overlapping area 330 respectively. In this way, after the first side overlapping area 320 and the second side overlapping area 330 are folded over, their edges are joined to form the junction 6. The junction 6 is formed by j oining the edges of the first side overlapping area 320 and the second side overlapping area 330, so that the central overlapping area 310 does not need to be cut, and the folded edges of the central overlapping area 310 and the bottom surface covering area 2 are kept intact and insulated.

Moreover, in addition to achieving non-overlapping by means of edge joints, in other embodiments, due to the differences between insulation materials or the differences between the shapes and structures of insulated objects, other structures that may achieve non-overlapping may also be adopted. The degree of coverage of the edge gap between the non-overlapping areas by another of the three overlapping areas will be different because of the shape and size of the gap formed by the non-overlapping areas. In this example, the junction 6 is covered by the second side overlapping area 330, closing the connected edge gap is a preferred implementation method, which may cover the edge gap to the greatest extent and improve the insulation effect.

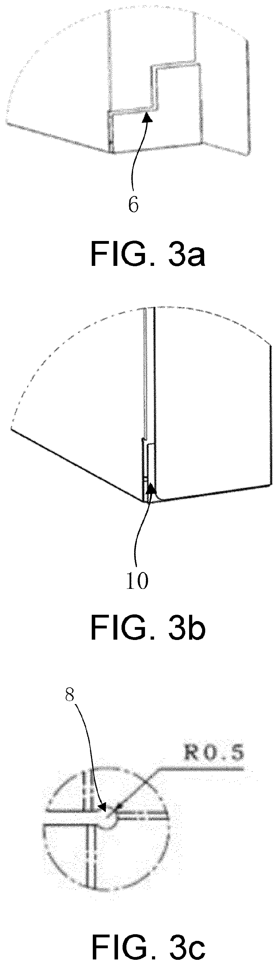

As shown in FIG. 1 and FIG. 3a, the shape of the junction 6 is stepped, and in a flattened state, the junction 6 is exhibited as a convex gap 5. A part of the gap 5 is located in the central overlapping area 310, and another part is located in the first side overlapping area 320. After the central overlapping area 310 and the first side overlapping area 320 are respectively folded, the edge of the gap 5, that is, the central overlapping area 310 is joined with the edge of the first side overlapping area 320 to form the junction 6.

In other embodiments, the shape of the junction 6 may be adjusted accordingly according to the needs of the joint effect. Preferably, the shape of the junction 6 may be one of straight lines, curves and steps, which is easy to cut, and it is easy to control the edges of the two overlapping areas forming the junction 6 to be consistent, thereby reducing errors.

As shown in FIG. 3c, a transition gap 8 is provided at the junction of the central overlapping area 310, the bottom surface covering area 2 and the second side covering area 32. The transition gap 8 is specifically a small arc-shaped gap with a radius R of 0.5 mm. Such a transitional gap 8 is set so that the three overlapping areas are easy to be folded over at the transitional gap 8, so as to avoid the occurrence of stress at the junction and cracking of the first insulation member. If crack occurs, there might be a risk of electric leakage at this junction, so the risk of electric leakage may be avoided through the transition gap 8.

As shown in FIG. 1, after the first insulation member 1 is unfolded, each covering area is an intact overall plane. Therefore, the first insulation member 1 is integrally formed, so that the first insulation member 1 is easy to process and avoids insulation risks due to separation and splicing.

As shown in FIG. 2c and FIG. 3b, the insulation structure 100 further includes a second insulation member 9, which is specifically an insulation tape. In the above description, since the extension length of the second side overlapping area 330 is only just equal to the width of the folded side of the central overlapping area 310, and there is no redundant part beyond the junction edge between the central overlapping area 310 and the second side covering area, so that there is also a small section of non-closed gap 10 near the bottom edge of the central overlapping area 310 in the junction 6, and which causes a potential risk of non-insulation. Therefore, the second insulation member covers the edge gap of the junction 6, so as to exactly close this small section of non-closed gap 10, thereby ensuring the full insulation effect of various edges of the junction 6.

In other embodiments, due to the different shapes of the junction 6 or the use of other non-overlapping structures, or the extension length of the second side overlapping area 330 is able to cross the junction edge between the central overlapping area 310 and the second side covering area 32 to close the small section of non-closed gap, the second insulation member 9 might be non-necessary.

As shown in FIG. 2c, the insulation structure 100 further includes a fixing part 11, which is specifically a kind of adhesive tape, and the fixing part 11 connects the second side overlapping area 330 and two opposite second side covering areas 32. The other of the three overlapping areas (in this embodiment, said other one refers to the second side overlapping area 330) and the two opposite second side covering areas 32 are connected by the fixing part, and the two opposite second side covering areas 32 are fixed with other covering areas to form the accommodation space 4, which also allows the three overlapping areas to have connection strength after being folded to ensure the stability of the accommodation space 4.

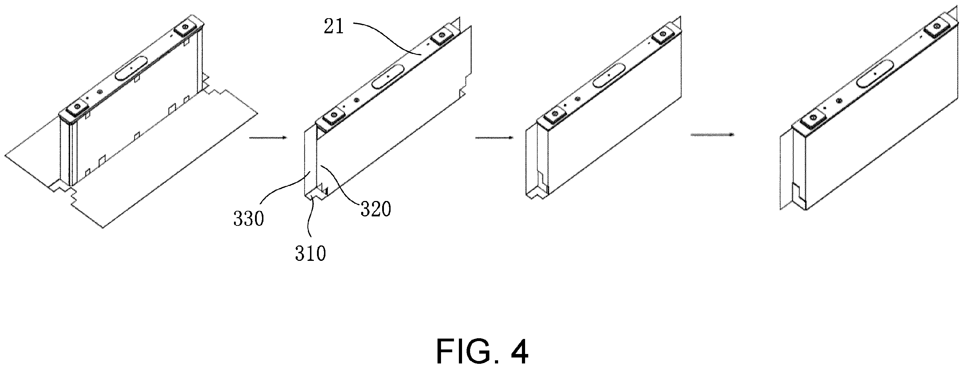

As shown in FIG. 4, this figure is a schematic view of the specific folding steps of the Mylar sheet. The diagram shows the whole process steps starting from the cut and flattened Mylar sheet, each covering area and each overlapping area are folded until the electrode assembly may be covered, and the state of the insulation structure 100 at the end of each step (the steps in the figure do not include the wrapping of the second insulation member 9 and the adhesion of the fixing part 11, the wrapping of the second insulation member 9 and the adhesion of the fixing part 11 may be derived with reference to FIG. 2c).

### Embodiment 2

This embodiment provides another insulation structure 100, the insulation structure 100 of this embodiment is substantially the same as the insulation structure 100 of Embodiment 1, the difference lies in:
The insulation structure 100 further includes a third insulation part, which is a part of the whole Mylar sheet, and a surface thereof is covered with colloid to make it sticky. The third insulation member at least covers part of the top area of the accommodation space 4 and partially overlaps with the side covering area 3. That is to say, in this implementation, the third insulation member does not completely cover the top area, and after the third insulation member is folded, the area covered by the side covering area 3 is only a small part, not all of them. In this way, it is possible to avoid that the third insulation member is too long to be leveled with the side covering area 3. In this embodiment, the length of the third insulation member is relatively short, so the third insulation member may be flattened with the side covering area 3 to obtain a better fixing effect. It should be understood that in other embodiments, the third insulation member may also cover the entire top area. In this embodiment, the insulation effect of the top area is achieved through the third insulation member with the above structure, and the folded edge of the third insulation member folded toward the side covering area may also achieve the insulation effect, thus improving the insulation effect of the entire insulation structure 100 in each covering area.

In this embodiment, the third insulation member at least exists in the middle section of the top, that is, the area below the explosion-proof valve, so that the area corresponding to the explosion-proof valve is insulated, avoiding leakage of the electrolyte, and further improving safety.

In other embodiments, depending on the different configuration areas of the explosion-proof valve, the position of the third insulation member will be adjusted accordingly.

### Embodiment 3

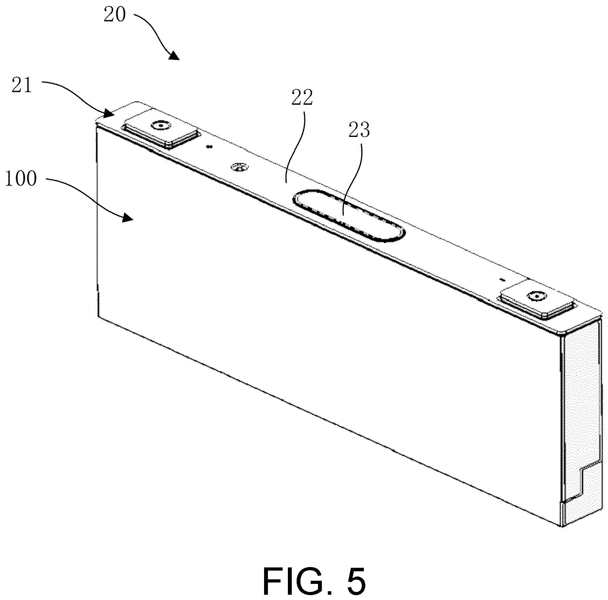

As shown in FIG. 5, this embodiment provides a secondary battery 20, and the secondary battery 20 is also a rechargeable battery. The secondary battery 20 includes an electrode assembly 21, a housing (not shown in the figure), a top cover assembly 22 and an insulation structure 100 as shown in Embodiment 1.

The housing has an opening (not shown in the figure), the electrode assembly 21 is accommodated in the housing. The top cover assembly 22 is connected to the housing and covers the opening of the housing. The central area of the top cover assembly 22 is provided with an explosion-proof valve 23, and the insulation structure 100 covers the outer side of the electrode assembly 21, that is, an insulation film is provided between the housing and the electrode assembly 21 to space the housing and the electrode assembly apart, thereby improving the insulation effect between the coated surface and edge of the electrode assembly and the housing, thus avoiding risk of short circuit. In the meantime, the thickness of the electrode assembly in the first side covering area 31 is not increased, and the subsequent configuration requirements of the secondary battery are not affected.

### Embodiment 4

The present embodiment also provides a battery pack, the battery pack includes: a box, the secondary battery as described in Embodiment 3, and a cover; the cover is used to cover the opening of the box to form a closed space with the space of the box to accommodate the secondary battery.

## Claims

1. An insulation structure (100), comprising a first insulation member (1), wherein the first insulation member (1) comprises a bottom surface covering area (2) and a side covering area (3), and the side covering area (3) is located on a same side of the bottom surface covering area (2) to form an accommodation space (4);
the side covering area (3) comprises two opposite first side covering areas (31) and two opposite second side covering areas (32);
at least one of the two opposite first side covering areas (31) comprises a central overlapping area (310), a first side overlapping area (320) and a second side overlapping area (330), the central overlapping area (310) is formed by extending the bottom surface covering area (2), the first side overlapping area (320) is formed by extending one of the two opposite first side covering areas (31), and the second side overlapping area (330) is formed by extending the other of the two opposite first side covering areas (31);
wherein, two of the central overlapping area (310), the first side overlapping area (320) and the second side overlapping area (330) do not overlap each other, and the other of the central overlapping area (310), the first side overlapping area (320) and the second side overlapping area (330) at least partially covers an area between the two areas that are not overlapped.

2. The insulation structure (100) according to claim 1, wherein edges of two of the central overlapping area (310), the first side overlapping area (320) and the second side overlapping area (330) are joined to form a junction (6), and the other of the central overlapping area (310), the first side overlapping area (320) and the second side overlapping area (330) at least partially covers the junction (6).

3. The insulation structure (100) according to claim 1 or 2, wherein a shape of the junction (6) is a straight line.

4. The insulation structure (100) according to any one of claims 1 to 3, wherein a shape of the junction (6) is a stepped shape.

5. The insulation structure (100) according to any one of claims 1 to 4, wherein a shape of the junction (6) is a curved shape.

6. The insulation structure (100) according to any one of claims 1 to 5, wherein one of the first side overlapping area (320) and the second side overlapping area (330) is connected to an edge of the central overlapping area (310) to form the junction (6).

7. The insulation structure (100) according to any one of claims 1 to 6, wherein edges of the first side overlapping area (320) and the second side overlapping area (330) are joined to form the junction (6).

8. The insulation structure (100) according to any one of claims 1 to 7, wherein a transition gap (8) is provided at a junction (6) of the central overlapping area (310), the bottom surface covering area (2) and the second side covering area (32).

9. The insulation structure (100) according to any one of claims 1 to 8, wherein the first insulation member (1) is integrally formed.

10. The insulation structure (100) according to any one of claims 1 to 9, wherein the insulation structure (100) further comprises a second insulation member (9), and the second insulation member (9) covers a gap at an edge of the junction (6).

11. The insulation structure (100) according to any one of claims 1 to 10, wherein the insulation structure (100) further comprises at least one of the following:
a fixing part (11), and the fixing part (11) connects the other one of the central overlapping area (310), the first side overlapping area (320) and the second side overlapping area (330) and the two opposite second side covering areas (32); and
a third insulation member, the third insulation member covers at least part of a top area of the accommodation space (4) and at least partially overlaps with the side covering area (3), wherein the third insulation member covers an area corresponding to an explosion-proof valve (23).

12. The insulation structure (100) according to any one of claims 1 to 11, wherein a material of the third insulation member comprises colloid.

13. The insulation structure (100) according to any one of claims 1 to 12, wherein the accommodation space (4) is configured to cover an electrode assembly (21).

14. A secondary battery (20), comprising an electrode assembly (21), a housing, a top cover assembly (22) and the insulation structure (100) according to any one of claims 1 to 13;
wherein the housing has an opening, the electrode assembly (21) is accommodated in the housing, and the top cover assembly (22) is connected to the housing and covers the opening of the housing; and
the insulation structure (100) covers an outer side of the electrode assembly (21).

15. A battery pack, comprising:
a box;
the secondary battery (20) according to claim 14;
a cover, which covers an opening of the box to form a closed space with a space of the box to accommodate the secondary battery (20).
